# EUROPÄISCHE PATENTSCHRIFT

(11) **EP 0 911 249 B1**
(45) Veröffentlichungstag und Bekanntmachung des Hinweises auf die Patenterteilung: **12.03.2003**
(21) Anmeldenummer: 98117023.6
(22) Anmeldetag: 09.09.1998
(51) Int. Cl.: B62J 17/00

(54) **Schutzvorrichtung für Motorräder**
Protection device for motorcycles
Dispositif de protection pour motocyclettes

(30) Priorität: 21.10.1997 DE 19746441
(43) Veröffentlichungstag der Anmeldung: 28.04.1999
(73) Patentinhaber: Bayerische Motoren Werke Aktiengesellschaft, 80788 München (DE)
(72) Erfinder: Rehschuh, Rainer, 84072 Au (DE); Robb, David, 81245 München (DE); Heinrich, Edgar, 85356 Freising (DE)

(56) Entgegenhaltungen:
- CH-A5- 590 751
- US-A- 4 141 567

## Beschreibung

Die Erfindung betrifft eine Schutzvorrichtung für Motorräder zum Schutz der Hände des Fahrers vor Wind und Wettereinflüssen, bestehend aus einem als Windabweiser ausgebildeten Rückspiegelgehäuse, das im Abstand vor den beiden Handgriffen des Lenkers angeordnet ist.

Eine derartige Schutzvorrichtung ist bereits bekannt. Um mit dieser bekannten Schutzvorrichtung einen ausreichenden Schutz der Hände vor Wind und Wettereinflüssen zu erzielen, sind verhältnismäßig große Abmessungen des Rückspiegelgehäuses erforderlich. Aus ästhetischen Gründen und wegen des angestrebten geringen Luftwiderstandes kann das Rückspiegelgehäuse aber nicht beliebig vergrößert werden. Mit dieser bekannten Schutzvorrichtung ist zwar eine gewisse Ablenkung des Fahrtwindes möglich, eine gezielte Anströmung läßt sich aber nur schwer erreichen. Der auf das Rückspiegelgehäuse auftreffende Fahrtwind wird zwar von dessen geneigter Oberseite umgelenkt, er strömt aber von der Oberkante des Rückspiegelgehäuses im wesentlichen horizontal nach hinten. Im übrigen ist die bekannte Schutzvorrichtung weitgehend wirkungslos, wenn sie nicht laminar angeströmt wird. Dies ist insbesondere dann der Fall, wenn von einem vorausfahrenden größeren Fahrzeug, beispielsweise einem Lastkraftwagen, starke Turbulenzen erzeugt werden.

Der Erfindung liegt die Aufgabe zugrunde, die bekannte Schutzvorrichtung hinsichtlich ihrer Wirksamkeit zu verbessern.

Erfindungsgemäß wird diese Aufgabe mit einer gattungsgemäßen Schutzvorrichtung gelöst, die dadurch gekennzeichnet ist, daß über dem Rückspiegelgehäuse ein zu dessen geneigter Oberseite näherungsweise paralleles Leitblech angeordnet ist. Dieses Leitblech begrenzt mit der Oberseite des Rückspiegelgehäuses einen kanalartigen Zwischenraum, der eine Düsenwirkung hat. Versuche haben gezeigt, daß der durch diesen schräg nach oben ansteigenden Zwischenraum hindurchströmende Luftstrom erst in einigem Abstand hinter dem Rückspiegelgehäuse horizontal verläuft. Gegenüber dem Stand der Technik wird somit bei gleichen Abmessungen des Rückspiegelgehäuses eine größere Umlenkung des Luftstromes und damit eine größere Schutzwirkung erreicht. Dies gilt auch dann, wenn die anströmende Luft durch Turbulenzen stark verwirbelt ist.

Im Hinblick auf die von dem Leitblech verursachte Düsenwirkung ist es besonders vorteilhaft, wenn der von dem Rückspiegelgehäuse und dem Leitblech begrenzte Zwischenraum nach oben verjüngt ist. Dadurch wird eine Beschleunigung des Luftstromes erreicht, so daß dieser nach Verlassen des Zwischenraums seine Richtung zunächst beibehält, bevor er horizontal verläuft.

Bei einer konstruktiv einfachen und besonders formschönen Ausführungsform der Schutzvorrichtung ist vorgesehen, daß das Leitblech mit einer Frontverkleidung einstückig verbunden ist.

Im übrigen ist es auch möglich, daß der Windleitkörper von einem kombinierten Rückspiegel- und Blinkergehäuse gebildet ist.

Ein bevorzugtes Ausführungsbeispiel der Erfindung ist in der Zeichnung dargestellt und wird im folgenden näher erläutert. Es zeigt:
Fig. 1 eine schematische perspektivische Darstellung einer mit der Frontverkleidung eines Motorrades kombinierten Schutzvorrichtung; und
Fig. 2 in größerem Maßstab einen vertikalen Schnitt nach der Linie II in Fig. 1.

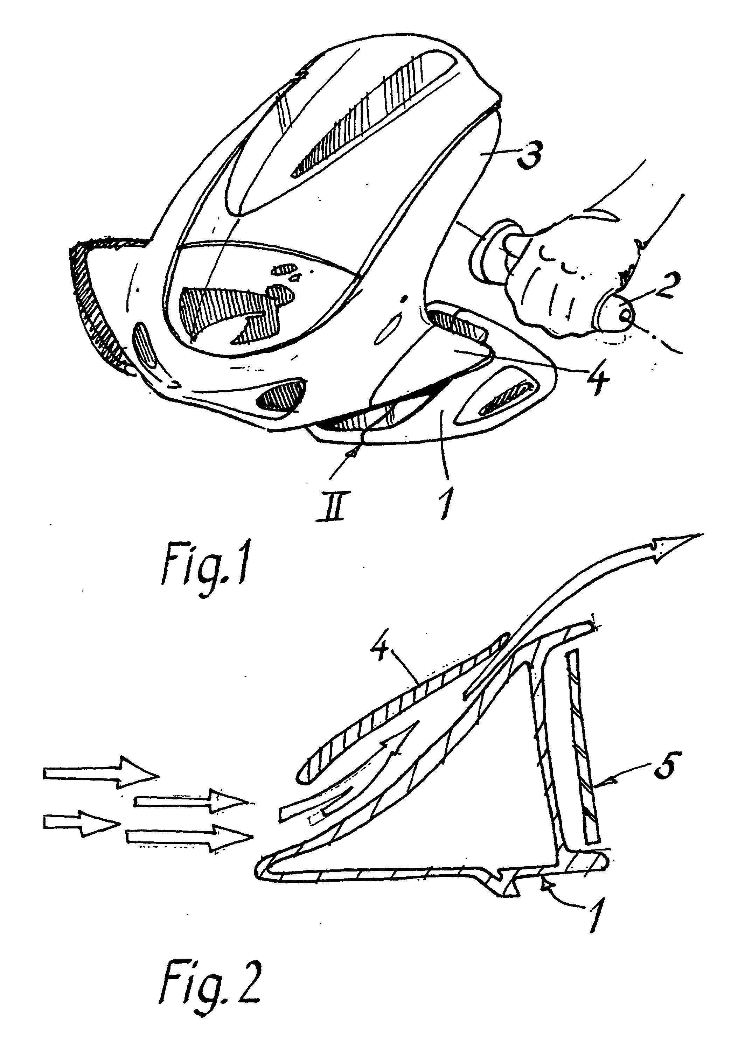

In Fig. 1 ist schematisch ein kombiniertes Rückspiegel- und Blinkergehäuse 1 gezeigt, das im Abstand vor den Handgriffen 2 (von denen nur einer gezeigt ist) des Lenkers angeordnet ist. Eine Frontverkleidung 3 des (nicht gezeigten) Motorrades ist mit zwei seitlichen Leitblechen 4 einstückig ausgebildet.

Wie aus dem vertikalen Schnitt nach Fig. 2 hervorgeht, hat das kombinierte Rückspiegel- und Blinkergehäuse 1 einen im wesentlichen dreieckigen oder keilförmigen Querschnitt mit einer schräg nach oben ansteigenden Oberseite. Das Leitblech 4 ist zu der geneigten Oberseite des Rückspiegelgehäuses 1 näherungsweise parallel. Zur Steigerung der Düsenwirkung ist es jedoch vorteilhaft, wenn der von dem Rückspiegelgehäuse 1 und dem Leitblech 4 begrenzte kanalartige Zwischenraum wie gezeigt nach oben verjüngt ist. Infolge der Querschnittsverengung des Zwischenraums ist die Austrittsgeschwindigkeit der Luft größer als die Eintrittsgeschwindigkeit.

Im normalen Fahrbetrieb wird die Schutzvorrichtung näherungsweise horizontal angeströmt, wie dies in Fig. 2 durch Pfeile veranschaulicht ist Wenn der Fahrtwind auf das keilförmige Rückspiegelgehäuse 1 trifft, dann wird er schräg nach oben umgelenkt und infolge der Düsenwirkung des Leitblechs 4 beschleunigt. Der mit erhöhter Geschwindigkeit aus dem oberen Ende des kanalartige Zwischenraums austretende Luftstrom ändert seine Richtung daher nur langsam zu einem horizontalen Verlauf. Der hinter dem Rückspiegelgehäuse 1 bzw. dem Rückspiegel 5 angeordnete Handgriff 2 und die Hand des Fahrers befinden sich daher im Windschatten. Wie aus Fig. 2 hervorgeht, ist der vom Fahrtwind geschützte Bereich höher als das Rückspiegelgehäuse 1. Es kann daher bei geringem Luftwiderstand eine hohe Schutzwirkung erzielt werden. Da das Leitblech 4 von einer seitlichen Verlängerung der Frontverkleidung 3 gebildet ist, macht die Schutzvorrichtung keine zusätzlichen Bauteile erforderlich.

## Patentansprüche

1. Schutzvorrichtung für Motorräder zum Schutz der Hände des Fahrers vor Wind und Wettereinflüssen, bestehend aus einem als Windabweiser ausgebildeten Rückspiegelgehäuse (1), das im Abstand vor den beiden Handgriffen (2) des Lenkers angeordnet ist, **dadurch gekennzeichnet, daß** über dem Rückspiegelgehäuse (1) ein zu dessen geneigter Oberseite näherungsweise paralleles Leitblech (4) angeordnet ist.

2. Schutzvorrichtung nach Anspruch 1, **dadurch gekennzeichnet, daß** der von dem Rückspiegelgehäuse (1) und dem Leitblech (4) begrenzte Zwischenraum nach oben verjüngt ist.

3. Schutzvorrichtung nach Anspruch 1 oder 2, **dadurch gekennzeichnet, daß** das Leitblech (4) mit einer Frontverkleidung (3) einstückig verbunden ist.

4. Schutzvorrichtung nach Anspruch 1, 2 oder 3, **dadurch gekennzeichnet, daß** der Windabweiser von einem kombinierten Rückspiegel- und Blinkergehäuse (1) gebildet ist.

## Claims

1. A protective device on motorcycles for protecting the driver's hands from wind and weather, the device comprising a rear-mirror casing (1) in the form of a wind deflector and disposed at a distance from the two handlebar grips (2), **characterised in that** a baffle plate (4) is disposed over the rear-view mirror casing (1) and is approximately parallel with the inclined top thereof.

2. A protective device according to claim 1, **characterised in that** the rear-view mirror casing (1) and the baffle plate (4) bound a space which tapers upwards.

3. A protective device according to claim 1 or claim 2, **characterised in that** the baffle plate (4) is connected to and integral with a front covering (3).

4. A protective device according to claim 1, 2 or 3, **characterised in that** the wind deflector is in the form of a combined rear-view mirror and blinker casing (1).

## Revendications

1. Dispositif de protection pour motocyclettes, destiné à mettre les mains du conducteur à l'abri du vent et des influences des intempéries et composé d'un boîtier de rétroviseur (1) configuré en déflecteur de vent disposé à une certaine distance devant les deux poignées (2) du guidon,
**caractérisé en ce qu'**
au dessus du boîtier de rétroviseur (1) est montée une tôle directrice (4) à peu près parallèle à la face supérieure inclinée de celui-ci.

2. Dispositif de protection selon la revendication 1,
**caractérisé en ce que**
l'espace intermédiaire délimité par le boîtier de rétroviseur (1) et par la tôle directrice (4) va en se rétrécissant vers le haut.

3. Dispositif de protection selon la revendication 1 ou la revendication 2,
**caractérisé en ce que**
la tôle directrice (4) est monobloc avec l'habillage frontal (3).

4. Dispositif de protection selon l'une quelconque des revendications 1, 2 ou 3,
**caractérisé en ce que**
le déflecteur de vent est constitué par un boîtier (1) combinant réflecteur et clignotant.
